# EUROPÄISCHE PATENTSCHRIFT

(11) **EP 0 697 598 B1**
(45) Veröffentlichungstag und Bekanntmachung des Hinweises auf die Patenterteilung: **30.09.1998**
(21) Anmeldenummer: 95110646.7
(22) Anmeldetag: 08.07.1995
(51) Int. Cl.: G01P 21/02

(54) **Prüfeinrichtung für Fahrzeuge mit magnetfeldsensitivem Raddrehzahlsensor**
Test device for vehicles with a magnetic field sensitive wheel speed sensor
Dispositif de test pour véhicules avec capteur sensible au champ magnétique pour déterminer la vitesse de rotation d'une roue

(30) Priorität: 18.08.1994 DE 4429311
(43) Veröffentlichungstag der Anmeldung: 21.02.1996
(73) Patentinhaber: DAIMLER-BENZ AKTIENGESELLSCHAFT, 70567 Stuttgart (DE)
(72) Erfinder: Frey, Gerhard, Dipl.-Ing., D-73733 Esslingen (DE); Hirth, Thomas, Dipl.-Ing., D-70597 Stuttgart (DE); Grohmann, Dieter, Dipl.-Ing., D-76185 Karlsruhe (DE); Reichart, Willi, D-71131 Jettingen (DE)

(56) Entgegenhaltungen:
- WO-A-93/22630
- DE-A- 2 545 414
- DE-A- 4 027 046
- GB-A- 2 096 327
- US-A- 4 866 376

## Beschreibung

Die Erfindung bezieht sich auf eine Prüfeinrichtung für Fahrzeuge mit magnetfeldsensitivem Raddrehzahlsensor. Derartige Sensoren sind beispielsweise als Hallsensoren oder induktive Sensoren gebräuchlich. Letztere bestehen z.B. aus einem unbeweglich angeordneten Stabmagneten mit weichmagnetischem Polstift, der eine Induktionsspule trägt, sowie einem mit der Raddrehung gekoppelten, magnetfeldbeeinflussenden Zahnrad, das sich vor dem Polstift vorbeidreht und dadurch in der Spule eine der zeitlichen Änderung des Magnetflusses proportionale Spannung induziert. Einer gleichmäßigen Zahnstruktur entspricht ein sinusähnlicher Spannungsverlauf, so daß sich die Raddrehzahl aus dem Abstand der Nulldurchgänge der Induktionsspannung gewinnen läßt, wobei zusätzlich die Amplitude des Spannungssignals drehzahlproportional ist. Eine solche induktive Raddrehzahlsensorik findet häufig in Radschlupfregelsystemen, wie Antiblockiersystemen und Antriebsschlupfregelungen Verwendung. Eine weitere Ausführungsart eines magnetfeldsensitiven Sensors, der sich z.B. zur Positionsbestimmung an einem Stoßdämpfer eines Fahrzeugs eignet, ist in der Offenlegungsschrift EP 0 242 058 A1 beschrieben. Der dortige Sensor wird von einem Microcomputer gesteuert und enthält eine Erregerspule sowie eine Abtastspule, deren Abtastsignal von der Stoßdämpferposition abhängig ist und vom Microcomputer ausgewertet werden kann.

Eine Prüfung der Funktionstüchtigkeit eines mit derartiger Raddrehzahlsensorik ausgerüsteten Fahrzeuges erfordert unter anderem die Überprüfung der raddrehzahlverarbeitenden Steuergeräte und sonstigen, auf die Raddrehzahlsensorsignale reagierenden Fahrzeugkomponenten sowie deren Verbindungen untereinander. Bekanntermaßen kann diese Prüfung an einem herkömmlichen, komplex aufgebauten, nicht transportablen Rollenprüfstand erfolgen. Hierzu wird das Kraftfahrzeug auf dem Rollenprüfstand auf vorgegebene Drehzahlwerte beschleunigt, und die induktiven Drehzahlsensoren an den Rädern liefern ein drehzahlproportionales Signal, das an die betreffenden, zu prüfenden Fahrzeugkomponenten weitergeleitet wird. Auf diese Weise wird z.B. geprüft, ob die drehzahlabhängige Scheibenwischerrückschaltung funktioniert, ob der Tachometer richtig kalibriert ist, ob die Sicherheitsabschaltung eines Tempomats in der gewünschten Weise anspricht und/oder ob vorhandene Längsdynamiksteuergeräte zutreffende Werte liefern, wobei ein Prüfrechner zur Auswertung der Diagnoseinformationen vorgesehen sein kann. Bei diesen Prüfungen sind zum Teil sehr hohe Raddrehzahlen erforderlich, auf die der herkömmliche Prüfstand ausgelegt sein muß, wenn er zur Durchführung solcher Tests herangezogen werden soll. Neben ortsfesten Rollenprüfständen sind auch bereits transportable Prüfstände bekannt, wie z.B. der in der Offenlegungsschrift DT 25 45 414 A1 offenbarte Mini-Bremsenprüfstand.

Es ist des weiteren bekannt, Prüfungen von Fahrzeugkomponenten unter Verwendung von Simulations- und/oder Stimulationsvorrichtungen vorzunehmen. So ist in der Offenlegungsschrift GB 2 096 327 A eine tragbare Prüfeinrichtung offenbart, mit der Tachografen sowie die zu zugehörigen Sensoren führenden Impulssignalleitungen auf ihre Funktionstüchtigkeit hin geprüft werden können. Zu diesem Zweck wird die Prüfeinrichtung in den Verbindungsweg zwischen Tachograf und Sensoren eingeschleift. Mit der Prüfeinrichtung lassen sich Signale, welche raddrehzahlabhängige Sensorsignale simulieren, zur Überprüfung des Tachografen sowie eine Testspannung zur Prüfung der Verbindungsleitungen zu den Sensoren aur Kurzschluß oder Unterbrechnung erzeugen und die entsprechenden Antwortsignale auswerten.

In der Offenlegungsschrift DE 3 936 988 A1 ist eine Vorrichtung zur Kraftfahrzeugdiagnose beschrieben, bei der ein Diagnosesignalkoppler eine Stimulationseinheit zur Stimulierung einer Signalsenke, wie eines Aktuators, beinhalten kann, wobei die Übertragung des Stimulationgssignals galvanisch getrennt über Transformatoren oder Optokoppler erfolgen kann. Die Anordnung einer Stimulationseinheit innerhalb einer Fahrzeugprüfeinrichtung ist auch aus der Patentschrift EP 0 047 813 B1 bekannt. Dort ist angegeben, das Stimulationsgerät zur Simulation von Signalen bei stehendem Fahrzeug vorzusehen, wie sie real beim Betrieb des Fahrzeugs auftreten, um solchermaßen bei stehendem Fahrzeug zugehörige signalverarbeitende Komponenten des Fahrzeugs zu testen, wie z.B. elektronische Einspritzanlagen, elektronische Zündsysteme oder automatische Bremssysteme.

In der EP 0 338 373 A3 ist ein Prüfstand zum Testen des Antriebstranges eines Fahrzeuges offenbart, bei dem anstelle der herkömmlichen Rollen mehrere unabhängig momentengeregelte, elektrische Belastungsmaschinen direkt an die Wellen des zu prüfenden Antriebsstranges angeflanscht sind, wobei die Belastungsmaschinen von einem Simulationsrechner angesteuert werden. Auf diese Weise erfolgt eine Simulation der Fahrwiderstände, der Räder und des Fahrzeugbeschleunigungsverhaltens von realen Fahrzeugkomponenten, wie Hauptantriebsstrang, Achsgetriebe, Wellen, Kupplung, Getriebe und Verbrennungsmotor. Dabei sind Simulationen von Kurvenfahrten, von durchdrehenden Rädern, von unterschiedlichen Radradien und von durchdrehenden oder blockierenden Rädern möglich.

Der Erfindung liegt als technisches Problem die Bereitsstellung einer Einrichtung zum Prüfen von Fahrzeugkomponenten, die Signale einer magnetfeldsensitiven Raddrehzahlsensorik empfangen, zugrunde, mit der sich komplexe Prüfvorgänge für diese Komponenten mit geringem konstruktivem Aufwand flexibel und zuverlässig durchführen lassen.

Dieses Problem wird durch eine Prüfeinrichtung mit den Merkmalen des Patentanspruchs 1 gelöst. Das Vorsehen der raddrehungssimulierenden Vorrichtung, die in ihrem Aufbau bei gering gehaltenem Konstruktionsaufwand optimal an die Stimulierung eines induktiven Raddrehzahlsensors angepaßt ist, ermöglicht die Überprüfung von Fahrzeugkomponenten, denen derartige Drehzahlsensorsignale zugeführt werden, bei stehenden Fahrzeug und ohne daß eine reale Raddrehung vorgenommen werden muß. Hierzu simuliert die Steuereinheit über die Magnetspule das Reaktionssignal für den Sensorempfangsteil, wie es bei einer realen Raddrehung z.B. von einem angekoppelten magnetfeldbeeinflussenden Zahnrad geliefert wird.

Durch eine Weiterbildung aer Erfindung nach Anspruch 2 lassen sich Raddrehzahlverläufe vorgegebener Fahrzyklen vom Rechner für die Raddrehzahlsensorik simulieren, so daß raddrehzahlsensitive Fahrzeugkomponenten unter den Bedingungen eines gewünschten Fahrzyklusses bei in Wirklichkeit stehendem Fahrzeug getestet werden können.

In Weiterbildung der Erfindung nach Anspruch 3 verfügt die Prüfeinrichtung zusätzlich über gleichstrommotorbetriebene Rollen, die mit einem Fahrzeugrad in Rollverbindung treten können, um für bestimmte Prüfungen reale Drehungen ausgewählter Räder vornehmen zu können. Für diese Tests, z.B. mechanischer, hydraulischer und pneumatischer Fahrzeugkomponenten wie ABS- oder ASR- Bremsanlagenkomponenten, sind vergleichsweise geringe Radgeschwindigkeiten ausreichend, so daß die Rolleneinheit im Gegensatz zu kcmplexen, stationären Rollenprüfständen nicht auf hohe Geschwindigkeiten und Belastungen ausgelegt zu werden braucht und folglich kompakt und/oder transportabel aufgebaut sein kann. Kombiniert mit der Raddrehungen simulierenden Vorrichtung lassen sich Funktionsprüfungen nur mit simulierter Raddrehung, z.B. zur Tempomatprüfung, mit motorlastfreien realen und bei Bedarf zusätzlich simulierten Raddrehungen, z.B. zur ABS- oder ASR-Prüfung, sowie mit realen Raddrehungen unter Motorlast und bei Bedarf zusätzlichen simulierten Raddrehungen an nicht angetriebenen Achsen, z.B. zur Prüfung der elektronischen Getriebesteuerung, vornehmen. Des weiteren ermöglicht diese Ausgestaltung die Vermeidung des folgenden Doppelfehlers bei der Bremsanlagenprüfung, insbesondere zum Prüfen einer Fahrdynamikregelung. Bislang werden die Verbindungen der Drehzahlsensoren und der ABS-Bremsanlage auf dem herkömmlichen Rollenprüfstand getestet. Hierfür werden die Räder vom Fahrzeugantrieb beschleunigt, über eine Riemenkoppelung des Rollenprüfstandes werden die nicht angetriebenen Räder mitbeschleunigt, und anschließend erfolgt eine Entkopplung des Riementriebes. Über das ABS werden die Räder sequentiell abgebremst, wobei über die Diagnoseschnittstelle die sequentielle Abbremsung eingeleitet und der Drehzahlabfall der angesteuerten Räder gemessen wird. Wurden nun bei der Montage beispielsweise der linke und der rechte Sensoranschluß und zusätzlich der linke und der rechte ABS-Steuerteil vertauscht, kann dieser Fehler derzeit nicht erkannt werden. Die Fahrdynamikregelung, welche auf die Sensorik und das ABS zurückgreift, kann somit nicht vollständig geprüft werden. Mit der erfindungsgemäß ausgestalteten Prüfeinrichtung läßt sich dieser Doppelfehler hingegen gut erkennen. Hierfür werden die Sensoren stimuliert und die Stimulationswerte über die Diagnoseschnittstelle oder über den Datenbus ausgelesen. Der Vergleich der ausgelesenen Werte mit den Stimulationswerten zeigt an, ob die Sensoren richtig verbunden sind. Die weitere Prüfung des ABS erfolgt mit der Rolleneinheit. Der obige Doppelfehler ist somit eindeutig feststellbar. Zudem erlaubt diese Ausgestaltung der Erfindung die Erkennung von Doppelfehlern im System, z.B. wenn das Getriebesteuergerät eine falsche Softwareversion mit nicht korrekten Übersetzungsverhältnissen enthält und gleichzeitig eine für das Fahrzeug an sich nicht passende Achse, deren Übersetzungsverhältnis jedoch zu demjenigen des Steuergerätes paßt, eingebaut wurde. Mit den herkömmlichen Mitteln ist dieser Doppelfehler nur mit hohem Aufwand feststellbar, hingegen mit der solchermaßen erfindungsgemäß weitergebildeten Prüfeinrichtung, indem zunächst über eine Raddrehungssimulation mit zugehöriger Raddrehzahlsensorstimulation die Verbindung und die Software des Steuergerätes über eine Diagnoseleitung ermittelt und anschließend über ein reales Antreiben der Räder auf der Antriebsachse die Getriebeschaltungen geprüft werden. In Anspruch 4 sind vorteilhafte Realisierungen der Rolleneinheit angegeben.

Eine bevorzugte Ausführungsform der Erfindung ist in den Zeichnungen dargestellt und wird nachfolgend beschrieben. Hierbei zeigen:
- Fig. 1: eine schematische Blockdarstellung eines induktiven Raddrehzahlsensors mit zugeordneter Raddrehungs-Simulationsvorrichtung,
- Fig. 2: eine schematische Blockdarstellung des in Figur 1 gezeigten Raddrehzahlsensors,
- Fig. 3: ein Oszillograph-Schirmbild mit einem typischen, raddrehzahlrepräsentativen Induktionsspannungssignal des Sensors von Fig.2,
- Fig. 4: ein Oszillograph-Schirmbild mit einem Sensor-Induktionsspannungssignal, das mit der Anordnung von Fig.1 durch Simulation der zu Fig.3 gehörenden realen Raddrehungen erhalten wird,
- Fig. 5: eine schematiche Seitenansicht eines Fahrzeugs an einer Prüfeinrichtung mit für alle Räder zu aktivierender Raddrehungs-Simulationsvorrichtung und
- Fig. 6: eine Ansicht entsprechend Fig.5, jedoch mit nur an den Vorderrädern zu aktivierender Raddrehungs-Simulationsvorrichtung sowie mit einer Rolleneinheit an den Hinterrädern.

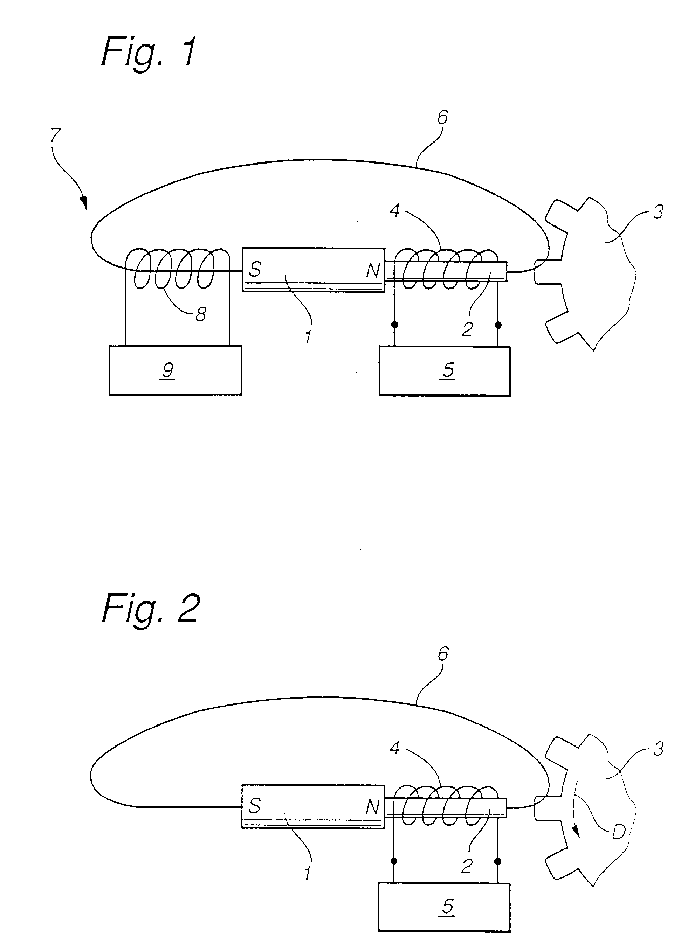

Zunächst wird anhand von Fig. 2 zum besseren Verständnis der Erfindung die an sich bekannte Funktionsweise eines induktiven Raddrehzahlsensors erläutert. Der dort schematisch gezeigte, typische induktive Raddrehzahlsensor beinhaltet einen Stabmagneten (1) mit magnetischem Südpol (S) und magnetischem Nordpol (N), an dessen einem Ende ein weichmagnetischer Polstift (2) abragt, der von einer Meßspule (4) umgeben ist. Vom magnetischen Nordpol des Polstiftes (2) laufen magnetische Feldlinien (6) zum magnetischen Südpol (S) des Stabmagneten (1) durch den Raum. Stabmagnet (1), Polstift (2) und Meßspule (4) sind so angeordnet, daß sie sich bei Drehung der Fahrzeugräder nicht mitbewegen. Dem magnetischen Nordpol des Polstifts (2) steht in gewissem, geringem Abstand ein magnetfeldbeeinflussendes Zahnrad (3) gegenüber, das an die Drehung eines zugeordneten Fahrzeugrades angekoppelt ist. Bei Drehung (D) des Rades und damit des Zahnrades (3) verändern die Zähne des Zahnrades (3) periodisch das erzeugte Magnetfeld (6), wodurch in der Meßspule (4) eine entsprechende periodische Induktionsspannung erzeugt wird. Dabei ist sowohl die Amplitude als auch die Frequenz des zeitlichen Induktionsspannungsverlaufs proportional zur Raddrehzahl. Einer gleichmäßigen Zahnstruktur entspricht ein sinusförmiger Spannungsverlauf. Das Spannungssignal der Meßspule (4) wird einem ABS-/ASR-Steuergerät (5) zugeführt, wo es ausgewertet und in einen Datenbus des Fahrzeugs eingeleitet oder über andere Verbindungsleitungen für weitere Steuergeräte, z.B. ein E-Gas-Steuergerät, aufbereitet und von dort in den Datenbus eingespeist wird.

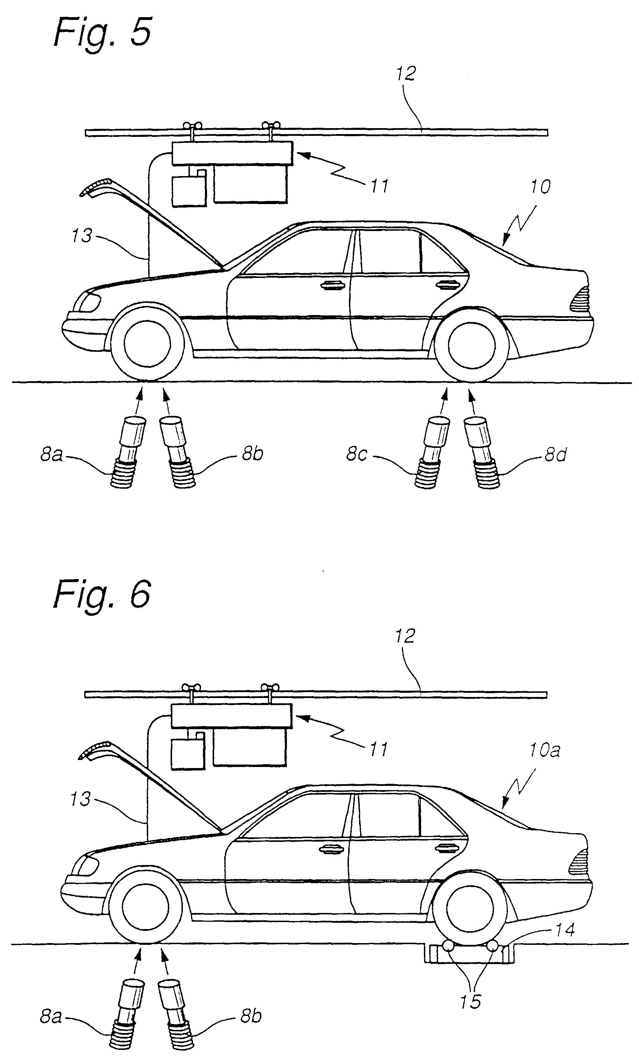

Um die Funktionalität einer solchen induktiven Raddrehzahlsensorik sowie der elektronischen und elektrischen Fahrzeugkomponenten, welche die von dieser Sensorik gewonnenen Raddrehzahlen als Zustandsgrößen verarbeiten, einerseits bereits während der Fahrzeugproduktion und andererseits auch in Reparaturwerkstätten prüfen zu können, ist eine in den Fig. 5 und 6 schematisch aufgezeigte Prüfeinrichtung vorgesehen, die eine Raddrehungs-Simulationsvorrichtung (7) für die induktive Raddrehzahlsensorik beinhaltet, deren Anordnung am Sensor in Fig.1 skizziert ist. Diese Raddrehungs-Simulationsvorrichtung (7) enthält eine sensorstimulierende Magnetspule (8), die auf der dem Zahnrad (3) gegenüberliegenden Seite von hinten in das Magnetfeld des Sensors eingebracht und in geeignetem Abstand vom Südpol (S) des Stabmagneten (1) angeordnet wird. Die Magnetspule (8) wird von einem Simulationsrechner (9) als Steuereinheit mit einer Wechselspannung angesteuert. Die an die Magnetspule (8) angelegte Wechselspannung ruft Änderungen des Magnetfeldes (6) des induktiven Sensors (1 bis 4) hervor, die denjenigen, welche durch Drehung des Zahnrades (3) im Fall realer Raddrehungen erzeugt werden, äquivalent sind. Insbesondere ergibt sich eine identische Frequenz des dadurch in der Meßspule (4) induzierten Spannungssignals, wenn der Rechner (9) die Frequenz der die Magnetspule (8) beaufschlagenden Wechselspannung gleich groß wählt wie die Frequenz der Abfolge der am Polstift (2) vorbeilaufenden Zähne des Zahnrades (3) im Fall realer Raddrehung. Folglich läßt sich mit der Raddrehungs-Simulationsvorrichtung (7) für die induktive Raddrehzahlsensorik (1 bis 4) und die von deren Ausgangssignal Gebrauch machenden, nachgeschalteten Fahrzeugkomponenten eine Raddrehung mit jeder gewünschten Drehzahl bzw. jedem gewünschten zeitlichen Drehzahlverlauf rechnergestützt simulieren. Mit Hilfe des Rechners können vorgegebene Fahrzyklen in Wechselspannungssignale für die Magnetspule (8) mit passendem Frequenzverlauf umgeformt und auf die Spule (8) gegeben werden, um die Komponenten anhand solcher Fahrzyklen testen zu können, ohne daß reale Raddrehungen erforderlich sind. Bei Bedarf kann die Magnetspule (8) mit einem ferromagnetischen Kern ausgerüstet sein.

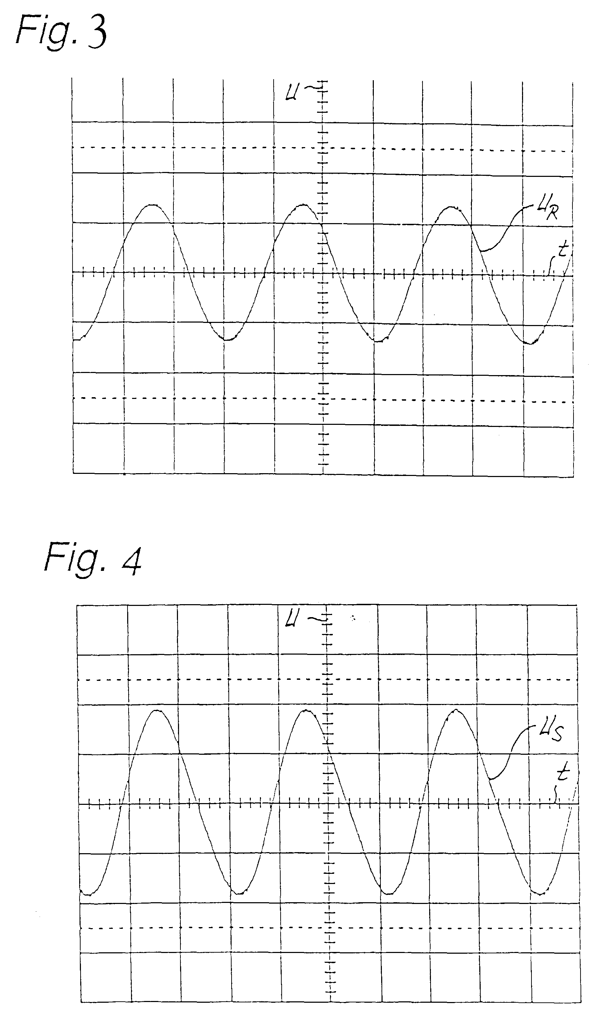

In den Figuren 3 und 4 sind beispielhaft Ausgangssignale der Sensorspule (4) gegenübergestellt, wie sie sich zum einen für den Fall einer realen Raddrehung und zum anderen für eine zugehörige Raddrehungssimulation ergeben. Auf den beiden Oszillographenschirmbildern sind jeweils auf der Abszisse die Zeit (t) und auf der Ordinate die Spannung (U) in willkürlichen Einheiten abgetragen. Das Bild von Fig. 3 zeigt einen Induktionsspannungsverlauf (U_{R}), wie er sich bei dem Sensor von Fig. 2 durch eine reale Raddrehung und damit durch eine Drehung des Zahnrades (3) ergibt. Dem ist in Fig. 4 ein zugehöriges Simulationsresultat gegebenübergestellt, bei der mit der Anordnung von Fig. 1 die sensorstimulierende Magnetspule (8) bei stehendem Rad mit einer Wechselspannungsfrequenz beaufschlagt wird, die der Zahnfolgefrequenz im Fall der realen Raddrehung von Fig. 3 entspricht. Es ist ersichtlich, daß die Frequenz der sich aus dieser Simulation ergebenden Induktionsspannung (U_{S}) in der Meßspule (4) mit derjenigen (U_{R}) der realen Raddrehung identisch ist, so daß die induktive Raddrehzahlsensorik und die dieser nachgeschalteten Fahrzeugkomponenten durch diese Simulation bzgl. ihrer Funktionalität bei beliebigen Raddrehzahlen bzw. Raddrehzahlverläufen bei in Wirklichkeit stehenden Fahrzeugrädern geprüft werden können.

Die in Figur 1 zur Erläuterung des Funktionsprinzips gezeigte Raddrehungs-Simulationsvorrichtung (7) ist Teil einer in den Figuren 5 und 6 gezeigten Gesamtprüfeinrichtung (11), die großteils verfahrbar an einer Laufschiene (12) in einem Testabschnitt der Fahrzeugproduktion angeordnet ist. Alternativ kann eine solche Prüfeinrichtung auch in Werkstätten vorgesehen sein, wobei die Prüfeinrichtung auch tragbar aufgebaut sein kann. Mit der Prüfeinrichtung (11) lassen sich die raddrehzahlsensitiven Fahrzeugkomponenten auf ihre Funktion mit unterschiedlichsten Raddrehungszuständen prüfen, wobei generell in Funktionsprüfungen ohne reale Raddrehung, d.h. nur mit simulierter Raddrehung, mit motorlastfreier, realer Raddrehung und mit motorgetriebener, realer Raddrehung unterschieden werden kann. Die Funktionsprüfungen ohne Motorlast und reale Raddrehung betreffen z.B. die Funktionen eines Tempomats bezüglich dessen Sicherheitsabschaltung, der drehzahlabhängigen Scheibenwischerrückschaltung und des Geschwindigkeitswarnsummers. Dieser Prüfvorgang ist in Figur 5 veranschaulicht. Bei diesem Prüfvorgang bleiben alle vier Räder des Fahrzeugs (10) stehen, wobei in den Magnetfeldbereich eines jedes induktiven Raddrehzahlsensors über eine jeweilige, symbolisch gezeigte, mechanische Vorrichtung (8a, 8b, 8c, 8d) eine zugehörige Meßspule der Simulationsvorrichtung eingebracht wird. Die vier Meßspulen werden von dem in der Prüfeinrichtung (11) integrierten Simulationsrechner einzeln mit der für sie für den jeweiligen Prüfvorgang jeweils passenden Wechselspannung geeigneter Frequenz angesteuert. Durch Vorgabe eines entsprechenden Raddrehzahl-Simulationszyklus läßt sich mit dieser Prüfanordnung auch eine Geschwindigkeitskalibrierung des Tachometers über die Stimulation der induktiven Raddrehzahlsensoren vornehmen. Die Meßdaten von den zu prüfenden Fahrzeugkomponenten und ggf. den Raddrehzahlsensoren und werden dabei jeweils über eine Meßleitung (13) der Prüfeinrichtung (11) zugeführt.

Manche Funktionsprüfungen, wie die Prüfung der ABS-und/oder ASR-Bremsanlage sowie die Überprüfung der Sensormontage, machen reale Raddrehungen erforderlich. Zu diesem Zweck verfügt die Prüfeinrichtung (11) über eine transportable Rolleneinheit (14) mit jeweils zwei Rollen (15) pro Fahrzeugrad, alternativ auch nur mit einer Rolle, welche in nicht näher gezeigter Weise von einem programmierbaren Steuerungsteil der Prüfeinrichtung (11) über Gleichstrommotoren antreibbar sind. Figur 6 zeigt den Fall, daß die Hinterrad-Antriebsachsräder auf jeweils einem Rollenpaar (15) aufsitzen, wozu das Fahrzeug (10) mit den Hinterrädern auf die bodenabgestützten Rolleneinheiten (14) gefahren wird, während die Vorderräder weiterhin Bodenkontakt haben. Die aufgrund des Fahrzeuggewichts gegen die Rollen (15) mit diesen in Rollverbindung stehend abgestützten Hinterräder werden durch die Rollen (15) zum Test der Bremsanlage mit relativ kleiner Geschwindigkeit angetrieben. Bei Bremsbetätigung steigt der Strom in den rollenantreibenden Gleichstrommotoren entsprechend des einwirkenden Bremsmomentes an, so daß über eine Strommessung die Funktionstüchtigkeit der Bremsanlage ermittelt werden kann. Analog kann zum Testen der Vorderräder vorgegangen werden.

Für Prüfungen bezüglich der Antriebsschlupfregelung, der Fahrdynamikregelung und der elektronischen Getriebesteuerung werden die auf den Rollen (15) aufliegenden Hinterachs-Antriebsräder wahlweise vom Fahrzeugmotor oder von den Rollen (15) angetrieben und deren Drehzahl von den Drehzahlsensoren berührungslos induktiv sensiert oder alternativ über eine vorhandene Diagnoseschnittstelle oder einen Datenbus ausgelesen und als Signal Information dem Simulationsrechner der Prüfeinrichtung (11) zugeführt. Der Rechner stimuliert bei Bedarf auf Basis dieser Hinterraddrehzahlen die Drehzahlsensoren der stehenden Vorderräder berührungslos mittels der Magnetspulen in der für den jeweiligen Test passenden Weise. Hierzu werden die Magnetspulen für die Vorderräder mit den mechanischen Positioniervorrichtungen (8a, 8b) in den jeweiligen Sensormagnetfeldbereich eingebracht, wie dies in Fig. 6 schematisch angedeutet ist. Mit dieser Konfiguration können folglich rechnergesteuert beliebige Fahrzustände, wie beispielsweise Antriebsschlupf, simuliert werden. Damit läßt sich das Gesamtsystem, soweit es raddrehzahlsensitive Komponenten betrifft, auch unter Motorlast testen, wobei die Raddrehzahlen vorne und hinten sowie links und rechts beliebig variiert werden können. Beim Testen der elektronischen Getriebesteuerung können als ein besonderer Vorteil der Prüfeinrichtung (11) Doppelfehler ermittelt werden, die beispielsweise aus einem Getriebesteuergerät mit falscher Softwareversion und folglich falschem Übersetzungsverhältnis bei gleichzeitiger Verwendung einer falschen Achse mit dem zum Steuergerät passenden, falschen Übersetzungsverhältnis resultieren und mit herkömmlichen Mitteln nicht feststellbar sind. Dazu wird so vorgegangen, daß zunächst mit dem Simulationsvorrichtungsteil der Prüfeinrichtung (11) Software und Verbindung des Getriebesteuergeräts über Sensorstimulation der Raddrehzahlsensoren der Antriebsachse bei stehenden Antriebsrädern geprüft und anschließend, wenn dadurch die Funktionstüchtigkeit des Getriebesteuergerätes verifiziert wurde, durch reales Antreiben der Antriebsachs-Hinterräder die Getriebeschaltungen getestet werden. Die erwähnten Doppelfehler können auf diese Weise zuverlässig erkannt werden.

Die beschriebene Prüfeinrichtung bietet den Vorzug, daß sich mit ihr relativ komplexe Prüfvorgänge von raddrehzahlsensitiven Fahrzeugkomponenten mit wenig aufwendigen Mitteln ohne einen herkömmlichen, stationären, komplexen Rollenprüfstand zeit-, produktions- und wartungsoptimal durchführen lassen. Ein weiterer Vorteil dieser Einrichtung ist ihre hohe, nicht ortsgebundene Flexibilität. So können entsprechende Prüfungen an den Orten durchgeführt werden, an denen die betreffenden Fahrzeugkomponenten zusammengebaut werden. Montagefehler lassen sich somit unmittelbar während der Produktion beheben. Neben den explizit angegebenen sind selbstverständlich noch weitere raddrehzahlabhängige Funktionsprüfungen möglich. Mit der Raddrehungs-Simulationsvorrichtung mit sensorstimulierender Magnetspule können sämtliche diesbezüglichen Funktionsprüfungen außerhalb eines herkömmlichen, stationären Rollenprüfstands ausgeführt werden. Insbesondere können bereits durch die externe simulatorische Signaleinspeisung allein die Funktionen zahlreicher drehzahlsensitiver Teilsysteme im Kraftfahrzeug, wie z.B. Tempomat, Tachometer, Scheibenwischerrückschaltung und Geschwindigkeitswarnsummer, geprüft werden. Die noch verbleibenden Funktionstests, z.B. bzgl. der Bremsanlage und einer elektronischen Getriebesteuerung, können unter zusätzlicher Verwendung der kompakten, transportablen Rolleneinheit oder auf einem herkömmlichen stationären Rollenprüfstand durchgeführt werden, wobei sich diese Tests auf Untersuchungen bei geringerer Raddrehzahl beschränken können, so daß ein stationärer Prüfstand nicht mehr auf maximale Raddrehgeschwindigkeit ausgelegt zu sein braucht. Außerdem reduzieren sich die Rollenprüfstandszeiten, und die reduzierte Dimensionierung solcher Prüfstände ermöglicht eine beträchtliche Kostenreduzierung.

Es versteht sich, daß für den Fachmann zahlreiche Modifikationen der oben beschriebenen Prüfeinrichtung im Rahmen der durch die Ansprüche festgelegten Erfindung möglich sind. So kann beispielsweise anstelle der transportablen, auf einem Boden aufzulegenden Rolleneinheit (14) eine fest im Boden verankerte Rolleneinheit oder eine Rolleneinheit vorgesehen sein, bei der die Rollen gegen das Rad eines angehobenen Fahrzeugs zur Gewährleistung des Rolle-Reifen-Rollkontaktes angepreßt werden. Außerdem ist eine solche Prüfeinrichtung auch für Fahrzeuge geeignet, bei denen zur Raddrehzahlüberwachung sog. Hallsensoren eingesetzt werden, bei denen ein erzeugtes und raddrehzahlabhängig modifiziertes Magnetfeld eine entsprechend variierende, meßbare elektrische Spannung in einem Hallelement hervorruft.

## Patentansprüche

1. Prüfeinrichtung für Fahrzeuge mit einem magnetfeldsensitiven Raddrehzahlsensor (1, 2, 3, 4), enthaltend eine Vorrichtung (7) zur Simulation von Raddrehungen mit einer sensorstimulierenden Magnetspule (8), die im Magnetfeldbereich des Sensors (1 bis 4) magnetfeldkoppelnd positionierbar ist, und einer Steuereinheit (9) zur Beaufschlagung der Magnetspule mit einer Wechselspannung, deren Frequenz die sensierte Drehzahl der simulierten Raddrehung bestimmt.

2. Prüfeinrichtung nach Anspruch 1, bei der die Steuereinheit aus einem Simulationsrechner (9) besteht, der Wechselspannungssignale, die Raddrehzahlverläufen vorgegebener Fahrzyklen entsprechen, für alle Fahrzeugräder zu erzeugen vermag.

3. Prüfeinrichtung nach Anspruch 1 oder 2, mit einer Rolleneinheit (14) mit wenigstens zwei gleichstrommotorbetriebenen Rollen (15), die gegen ein Fahrzeugrad in Rollverbindung mit demselben tretend anlegbar sind.

4. Prüfeinrichtung nach Anspruch 3, bei der die Rolleneinheit (14) als transportable Einheit ausgelegt ist, die bodenabgestützt oder frei mit an das Rad anpreßbaren Rollen an einem zugehörigen Fahrzeugrad positionierbar ist.

## Claims

1. Test device for vehicles having a wheel rotation speed sensor (1, 2, 3, 4) which is sensitive to magnetic fields, containing an appliance (7) for simulation of wheel rotations having a magnet coil (8) which stimulates sensors and can be positioned in the magnetic field region of the sensor (1 to 4) such that magnetic field coupling is provided, and having a control unit (9) for applying an AC voltage to the magnet coil, whose frequency determines the sensed rotation speed of the simulated wheel rotation.

2. Test device according to Claim 1, in which the control unit comprises a simulation computer (9) which can produce AC voltage signals, which correspond to wheel rotation speed profiles of predetermined driving cycles, for all the vehicle wheels.

3. Test device according to Claim 1 or 2, having a roller unit (14) having at least two rollers (15) which are driven by DC motors and can be applied to a vehicle wheel such that they are in touching rolling contact with it.

4. Test device according to Claim 3, in which the roller unit (14) is designed as a transportable unit which can be positioned on an associated vehicle wheel such that it is supported on the ground, or freely with rollers which can press against the wheel.

## Revendications

1. Dispositif de test pour véhicules comportant un capteur de vitesse de rotation de roue (1, 2, 3, 4) sensible à un champ magnétique, contenant un dispositif (7) pour simuler des rotations de roue comportant une bobine magnétique (8) stimulant un capteur et qui peut être positionnée dans la zone du champ magnétique du capteur (1 à 4), pour réaliser un couplage du champ magnétique, et une unité de commande (9) pour charger la bobine magnétique avec une tension alternative, dont la fréquence détermine la vitesse de rotation détectée de la rotation de roue simulée.

2. Dispositif de test selon la revendication 1, dans lequel l'unité de commande est constituée par un calculateur de simulation (9), qui peut produire des signaux de tension alternative, qui correspondent à des variations des vitesses de rotation de roues pour des cycles prédéterminés de déplacement, pour toutes les roues du véhicule.

3. Dispositif de test selon la revendication 1 ou 2, comportant
une unité de rouleaux (14) comportant au moins deux rouleaux (15), qui sont entraînés par un moteur à courant continu et peuvent être appliqués contre une roue du véhicule en établissant une liaison au roulement avec celle-ci.

4. Dispositif de test selon la revendication 3, dans lequel
l'unité à rouleaux (14) est agencée sous la forme d'une unité transportable qui est supportée au sol ou peut être positionnée librement contre une roue associée du véhicule au moyen de rouleaux pouvant être pressés contre la roue.
